# EUROPEAN PATENT APPLICATION

(11) **EP 2 453 681 A1**
(43) Date of publication of application: **16.05.2012**
(21) Application number: 10814937.8
(22) Date of filing: 25.06.2010
(51) Int. Cl.: H04W 4/12

(54) **SYSTEM AND METHOD FOR ROUTING SESSION INITIATION PROTOCOL CONVERSATION**

(30) Priority: 11.09.2009 CN 200910172959
(71) Applicant: ZTE Corporation, Shenzhen, Guangdong 518057 (CN)
(72) Inventor: LU, Yan, Shenzhen Guangdong 518057 (CN); CHEN, Jun, Shenzhen Guangdong 518057 (CN)
(74) Representative: Pichat, Thierry
(86) International application number: PCT/CN2010/074545
(87) International publication number: WO 2011/029335

(57) **Abstract**

A system and method for routing SIP session which can refer to converged IP messaging (CPM) are provided in the present invention, which can send the SIP session invite message to the same user' s multiple devices with the same user identifier of the same user; when the multiple devices belonging to the recipient are online simultaneously, the SIP session invite message is respectively routed by the service system to multiple devices. Thereby the problem of routing the SIP session of "one number, multiple device", which can refer to the CPM message and CPM session invite message, is solved, and the user experience is improved.

## Description

### Technical Field

The present invention relates to communication field, and specifically to a system and a method for routing SIP session which can refer to converged IP messaging (CPM).

### Background of the Related Art

With the increasingly wide application of services based on SIP protocol session such asVoIP telephone (conference), video conference, push-to-talk over cellular and so on, the service system generally distributes one user identifier for each user using these services, and the users are distinguished in the system according to the user identities.

The CPM is proposed in 2005 by the open mobile alliance (OMA for short), the purpose of which is to realize the interaction of multiple messaging services, providing a uniform messaging service and perfect, consistent and convenient messaging service experience for users. The CPM converges multiple existing messaging services, including instant messaging (IM), push-to-talk over cellular (POC), mobile e-mail (MEM), short messaging service (SMS), multimedia messaging service (MMS) and so on.

The forms of the CPM services may include: the pager mode CPM standalone message, large message mode CPM standalone message, other CPM services based on CPM sessions. The user needs to register and register in the CPM system, i.e. generally appear "online" or available in the CPM system, before using these services.

The CPM address is an identifier which is used to distinguish different users of the CPM system (may be called CPM Enabler, i.e. CPM service engine). In order to improve the user experience, in a CPM system, one user may have multiple CPM addresses and may register in multiple terminal devices, i.e., have his/her multiple CPM addresses "online" at the same time, so that the user can use multiple terminals in different scenes, and each of the terminal devices may be used to support different service function, e.g., audio-only communication, audio and video communication, etc. If a certain user registers in the CPM system with different terminals by using the same CPM address, when the user is the recipient of the CPM session and the CPM system sends a CPM session invite message to the recipient, the CPM session invite message needs to be routed to these terminals respectively if the recipient has multiple receiving terminals online simultaneously. Then the SIP/IP core network selects one recipient CPM client according to response messages of various recipient terminals, or one recipient CPM client is selected by the sender and the recipient independently, and thereby a session between the sender CPM client and the recipient CPM client is built, and the signaling control of media-to-media transmission is implemented based on the session. However, it is an unsolved problem what mechanism is used for the CPM session invite message being routed to these terminals. At present, in a case where there are multiple user terminals online, when the terminating participating function entity sends the CPM session invite message, there doesn't exist a specific technical scheme on how to route the CPM session invite mess ages to the multiple terminals that meet the receiving conditions.

Accordingly, in all the services based on the SIP session, such as the above-mentioned services like VoIP telephone (conference), video conference, push-to-talk over cellular and so on, in order to improve the user experience, multiple user identities may be distributed to one user, and when the corresponding service server sends the session request message to the recipient clients, there is an unsolved problem on how to route the session message to multiple recipient clients that meet the conditions if there are multiple recipient clients online and available at the same time.

### Summary of the Invention

The technical problem to be solved by the present invention is to provide a system and a method for routing SIP session which can refer to converged IP messaging, to realize sending the SIP session message such as CPM session message to multiple devices having the same user identifier such as the CPM address of the same user.

In order to achieve the above-mentioned purpose of the invention, the technical scheme of the present invention may be implemented as follows:

A method for routing SIP session message, comprises:
when a service server needs to send a SIP session invite message to one or more recipient clients, the service server sending the SIP session invite message which includes indication information, a SIP/IP core network receiving the SIP session invite message and then sending the SIP session invite message to said one or more recipient clients according to indication of the indication information.

The service server is a CPM participating function entity, the recipient client is a recipient CPM client and the SIP session invite message is a CPM session invite message.

The indication information is any one or more of the following parameters:
Reject-Contact, Accept-Contact and Request-Disposition.

The SIP/IP core network receiving the CPM session invite message and then further carrying out selection on the recipient CPM clients that meet receiving conditions in the indication information according to a local policy, and afterwards sending a CPM session invite message to each of the recipient CPM clients that meet the receiving conditions.

A method for routing instant message, comprises:
when an instant message server needs to send an instant message to one or more recipient clients, the instant message server sending the instant message which includes indication information, a SIP/IP core network receiving the instant message and then sending the instant message to said one or more recipient clients according to indication of the indication information.

The instant message server is a CPM participating function entity, the instant message is a pager mode CPM standalone message and the recipient client is a recipient CPM client.

The indication information is any one or more of the following parameters : Reject-Contact, Accept-Contact and Request-Disposition.

A method for routing SIP session message, comprising:

After receiving a SIP session invite message, a SIP/IP core network selecting one or more recipient clients according to any one or more of the following parameters, and then sending the SIP session invite message to each of the selected recipient clients; the parameters including: caller preference, online condition of each client, user configuration policy, operator policy and ability of each recipient client.

The recipient client is a recipient CPM client, and the SIP session invite message is a CPM session invite message.

A method for routing instant message comprises:
after receiving an instant message, a SIP/IP core network selecting one or more recipient clients according to any one or more of the following parameters, and then sending the instant message to each of the selected recipient clients; the parameters including: caller preference, online condition of each client, user configuration policy, operator policy and ability of each recipient client.

The instant message is a pager mode CPM standalone message, and the recipient client is a recipient CPM client.

A system for routing SIP session message, comprising a service server, a SIP/IP core network and one or more recipient clients; wherein
the service server is configured to include indication information in a SIP session invite message which is sent when the SIP session invite message is required to be sent to one or more recipient clients;
the SIP/IP core network is configured to send the SIP session invite message to said one or more recipient clients according to indication of the indication information after receiving the SIP session invite message.

The service server is a participating function entity, the SIP session invite message is a CPM session invite message and the recipient client is a recipient CPM client.

The indication information is any one or more of the following parameters:
Reject-Contact, Accept-Contact and Request-Disposition.

The SIP/IP core network is further configured to further carry out selection on the recipient CPM clients that meet receiving conditions in the indication information according to a local policy after receiving the CPM session invite message, and to send the CPM session invite message by forking to each of the recipient CPM clients that meet the receiving conditions.

A system for routing instant message, comprisinganinstantmessage server, a SIP/IP core network and one ormore recipient clients; wherein
the instant message server is configured to include indication information in an instant message which is sent when the instant message is required to be sent to one or more recipient clients;
the SIP/IP core network is configured to send the instant message to said one or more recipient clients according to indication of the indication information after receiving the instant message.

The instant message server is a CPM participating function entity, the instant message is a pager mode CPM standalone message and the recipient client is a recipient CPM client.

The indication information is any one or more of the following parameters: Reject-Contact, Accept-Contact and Request-Disposition.

A system for routing SIP session message, comprising a SIP/IP core network and one or more recipient clients, wherein:
the SIP/IP core network is configured to select one or more recipient clients according to one or more of the following parameters after receiving a SIP session invite message, and then send the SIP session invite message to each of the selected recipient clients; the parameters including: caller preference, online condition of each client, user configuration policy, operator policy and ability of each recipient client.

The SIP session invite message is a CPM session invite message, and the recipient client is a recipient CPM client.

A system for routing instant message, comprising a SIP/IP core network and one or more recipient clients, wherein:
the SIP/IP core network is configured to select one or more recipient clients according to one or more of the following parameters after receiving an instant message, and then send the instant message to each of the selected recipient clients; the parameters including: caller preference, online condition of each client, user configuration policy, operator policy and ability of each recipient client.

The instant message is a pager mode CPM standalone message, and the recipient client is a recipient CPM client.

To sum up, a system and a method for routing SIP session which can refer to converged IP messaging are provided by the present invention, which are able to send the SIP session invite message to multiple devices that have the same user identifier of the same user; in the case of the recipient using multiple devices that are online at the same time, the service system will route the SIP session invite messages to multiple devices respectively. Thereby the problem of routing the SIP session of "one number, multiple devices" including the CPM message and CPM session invite message is solved, and the user experience is improved.

The technical scheme of the present invention may apply not only to the multi-device routing of the CPM session invite message, but also to the multi-device routing of the pager mode CPM standalone message. Additionally, the technical scheme of the present invention may also apply to other services based on the SIP session, such as the routing of the session invite message of VOIP telephone (conference), video conference and so on; and may also apply to other instant messaging services such as instant messaging based on SIP, IMS and so on.

### Brief Description of Drawings

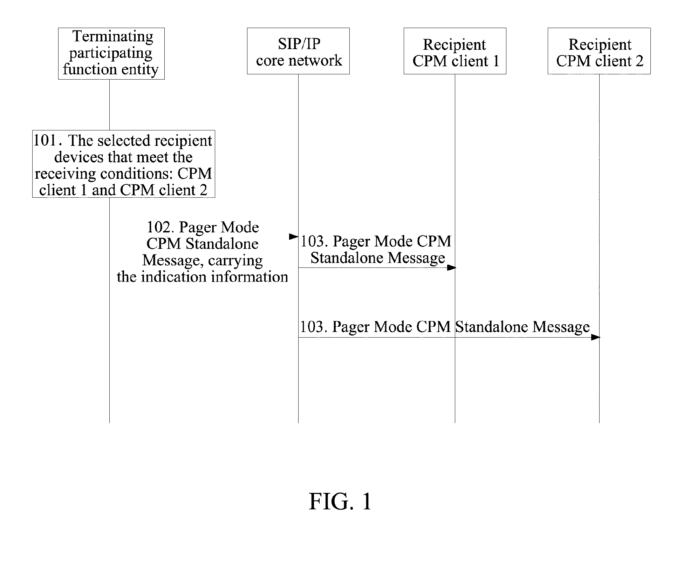

FIG. 1 is a flowchart of a terminating participating function entity sending a pager mode CPM standalone message according to the present invention;

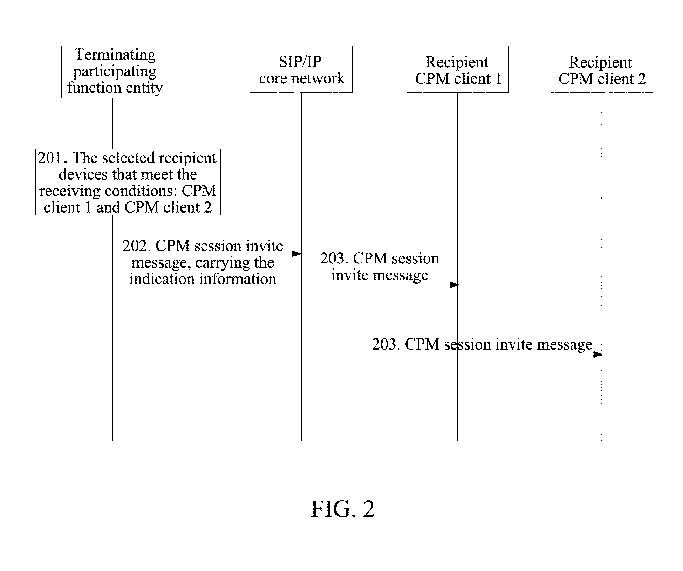

FIG. 2 is a flowchart of a terminating participating function entity sending a CPM session invite message according to the present invention.

### Preferred Embodiments of the Present Invention

A system and a method for routing the SIP session for the CPM session are provided by the present invention. The technical scheme of the present invention may also apply to other services based on the SIP session, such as the routing of the session invite message of VOIP telephone (conference), video conference and so on. Moreover, the system and the method also apply to the routing of the pager mode CPM standalone message and other instant messaging services, such as instant messages based on SIP, IMS and so on.

In the specific application, the service based on the SIP protocol may be considered to be composed of service server (also called application server: AS), SIP/IP core network and client. The service server may be a service system composed of one or more function entities. In general cases, the entity realizing all of the service functions in the network side (relative to the client) may be regarded as service server. In the CPM system, the instant message client is a CPM client, the CPM session is the CPM session service in the CPM system, and the service server may include a CPM participating function entity, a CPM controlling function entity and so on. In the IMS system, the SIP/IP core network is an IMS core network, and the instant message server is the instantmessage application server (AS) in the IMS system.

With the same principle, the present invention also applies to other services based on the SIP session, such as the routing for the session invite message of VOIP telephone (conference), video conference and so on. The service architecture of the present invention is the architecture based on the SIP/IP core network, and in some network environments, the SIP/IP core network may be a function unit integrated with the service server, and the present invention also applies to this networking condition.

Additionally, the present invention also applies to multi-client routing of the paging message, and in the CPM, the paging message is a pager mode CPM standalone message; and also applies to other instant messaging services such as the instant messages based on the SIP, IMS and so on.

Only the CPM session is described as an example of the routing technique of the present invention as bellow, and the principle of the routing technique for other applications is similar to the following content.

In the specific application, the recipient user may use one CPM address to register online by a CPM client in different devices, and the participating function entity to which the recipient belongs, that is the terminating participating function entity which is denoted as PF-B in the present invention. When sending a pager mode CPM standalone message or a CPM session invite message, the PF-B firstly selects frommultiple recipient CPM clients of the recipient according to the selecting rules and selects recipient CPM clients which meet the receiving conditions from multiple recipient clients. The terminating participating function entity includes the indication information in the request message that is sent, and the indication information indicates which devices the pager mode CPM standalone message or the CPM session invite message are to be sent or which devices the pager mode CPM standalone message or the CPM session invite message are not sent to, and the SIP/ IP core network carries out matching on the recipient CPM clients according to the indication information and sends the received pager mode CPM standalone message or the CPM session invite message by forking to the recipient CPM clients that meet the matching conditions.

### Embodiments of the system

### Embodiment 1

A system for routing CPM messages is provided by the embodiment, comprising: a terminating participating function entity, one or more recipient CPM clients and a SIP/IP core network;
the terminating participating function entity is configured to include the indication information in the sent CPM session invite message when the CPM session invite message is required to be sent to one or more recipient CPM clients;
the SIP/IP core network is configured to send the CPM session invite message to said one or more recipient CPM clients according to indication of the indication information after receiving the CPM session invite message.

The above-mentioned indication information is used to indicate the recipient CPM clients that meet the receiving conditions or the recipient CPM clients that do not meet the receiving conditions; the indication information is any one or more of the following parameters: Reject-Contact, Accept-Contact and Request-Disposition.

The SIP/IP core network is also configured to further carry out selection on the recipient CPM clients that meet the receiving conditions in the indication information according to the local policy after receiving the CPM session invite message, and send a CPM session invite message by forking to each of recipient CPM clients that meet the receiving conditions.

When including the Rej ect-Contact in the indication information, the terminating participating function entity sets the value of the Reject-Contact as the unique identity of the recipient CPM clients that do not meet the receiving conditions;

When including the Accept-Contact in the indication information, the terminating participating function entity sets the value of the Accept-Contact as the unique identity of the recipient CPM clients that meet the receiving conditions;

When including the Request-Disposition in the indication information, the terminating participating function entity sets the value of the Request-Disposition as fork or no fork.

### Embodiment 2

A system for routing CPM messages is provided by the embodiment, comprising: a terminating participating function entity, one or more recipient CPM clients and a SIP/IP core network;
the terminating participating function entity is configured to include the indication information in the sent pager mode CPM standalone message when the pager mode CPM standalone message is required to be sent to one or more recipient CPM clients;
the SIP/IP core network is configured to send the pager mode CPM standalone message to said one or more recipient CPM clients according to indication of the indication information after receiving the pager mode CPM standalone message.

The above-mentioned indication information is used to indicate the recipient CPM clients that meet the receiving conditions or the recipient CPM clients that do not meet the receiving conditions; the indication information is any one or more of the following parameters: Reject-Contact, Accept-Contact and Request-Disposition.

The SIP/IP core network is also configured to further carry out selection on the recipient CPM clients that meet the receiving conditions in the indication information according to the local policy after receiving the pager mode CPM standalone message, and send a pager mode CPM standalone message by forking to each of recipient CPM clients that meet the receiving conditions.

When including the Rej ect-Contact in the indication information, the terminating participating function entity sets the value of the Reject-Contact as the unique identity of the recipient CPM clients that do not meet the receiving conditions;

When including the Accept-Contact in the indication information, the terminating participating function entity sets the value of the Accept-Contact as the unique identity of the recipient CPM clients that meet the receiving conditions;

When including the Request-Disposition in the indication information, the terminating participating function entity sets the value of the Request-Disposition as fork or no fork.

In the above two embodiments, the terminating participating function entity carries out selection on the recipient CPM clients according to one or more of the conditions: caller preference, the called ability parameter, online condition of each recipient client, user configuration policy, operator policy (or called local policy) and so on; and the matching conditions of the devices that meet or do not meet the receiving conditions are carried by setting the indication fields of the SIP MESSAGE or SIP INVITE: Accept-Contact, Reject-Contact; and whether the SIP/IP core network needs to carry out the fork processing on the received SIP MESSAGE or the SIP INVITE message is explicitly indicated by the field of Request-Disposition, and after receiving the SIP MESSAGE or SIP INVITE, the SIP/IP core network selects the recipient CPM clients that meet the receiving conditions according to these indication fields plus the local policy, and send the request for fork to these recipient CPM clients.

### Embodiment 3

A system for routing converged IP message is provided by the embodiment, comprising a SIP/IP core network and one or more recipient converged IP message (CPM) clients;

The SIP/IP core network is configured to carry out selection according to one or more of the following parameters after receiving a CPM session invite message, and send a CPM session invite message to each of the selected recipient CPM clients: caller preference, online condition of each client, user configuration policy, operator policy and ability of each recipient client.

### Embodiment 4

A system for routing converged IP message is provided by the embodiment, comprising: a SIP/IP core network and one ormore recipient converged IP message (CPM) clients;

The SIP/IP core network is configured to carry out selection according to one or more of the following parameters after receiving a pager mode CPM standalone message, and then send a pager mode CPM standalone message to each of the selected recipient CPM clients: caller preference, online condition of each client, user configuration policy, operator policy and ability of each recipient client.

### Embodiment of the method

### Embodiment 1

A method for multi-client routing of pager mode CPM standalone messages in the embodiment, comprising the following steps:
Step S101: the terminating participating function entity needs to send the received pager mode CPM standalone message SIP MESSAGE to the recipient CPM client, and to judge that there is a plurality of the recipient CPM clients that meet the receiving conditions according to the receiving conditions, that is to say, the pager mode CPM standalone message is required to be sent to multiple online recipient CPM clients;

The pager mode CPM standalone message sent by the PF-B may be a real-time received pager mode CPM standalone message from a certain sender, or a non real-time sent pager mode CPM standalone message, that is a deferred pager mode CPM standalone message, in a case of the conditions being met (for example, the state of the recipient client changes from inaccessible to accessible). Before the pager mode CPM standalone message is sent to the recipient, the PF-B may select from a plurality of online clients of the recipient according to preset selection rules, such as factors like the caller preference, online condition of each client, user configuration policy, operator policy, ability of each recipient client and so on, and it is assumed that there are at least two CPM clients obtained that meet the preset selection conditions in the embodiment.

Step S102: the terminating participating function entity sends the paging CMP message which includes the indication information according to the selection results, and the indication information is used to indicate the recipient CPM clients that meet the receiving conditions or the recipient CPM clients that do not meet the receiving conditions;
the included indication information is any one or more of the following parameters: Reject-Contact, Accept-Contact and Request-Disposition. The Rej ect-Contact is set as the unique identity of the recipient CPM clients that do not meet the receiving conditions, and the Accept-Contact is set as the unique identity of the recipient CPM clients that meet the receiving conditions, and the value of the Request-Disposition is fork or no fork;

The unique identities included in the Accept-Contact and the Reject-Contact which are used to distinguish different CPM clients can be UUID, that is Universally Unique Identifier, or GRUU, that is Globally Routable User Agent (UA) URIs, called GRUU for short.

In this step, if there are multiple recipient CPM clients according to the selection result, the terminating participating function entity may send multiple pager mode CPM standalone messages or one pager mode CPM standalone message; when one pager mode CPM standalone message is sent, the unique identity of each of the recipient CPM clients that meet the receiving conditions is included in the Accept-Contact of the pager mode CPM standalone message, or the unique identity of each of the recipient CPM clients that do not meet the receiving conditions is included in the Reject-Contact; when multiple pager mode CPM standalone messages are sent, the unique identity of one recipient CPM client that meets the receiving conditions may be included in the Accept-Contact of each pager mode CPM standalone message, or the unique identity of one recipient CPM client that does not meet the receiving conditions may be included in the Reject-Contact.

Step S103: after receiving the pager mode CPM standalone message, the SIP/IP core network sends the pager mode CPM standalone message to each recipient CPM client that meets the receiving conditions according to the included indication information;
specifically, when the indication information includes the Reject-Contact, the SIP/IP core network sends the pager mode CPM standalone message to other online recipient CPM clients other than the recipient CPM client indicated by the parameter, and when the indication information includes the Accept-Contact, the SIP/IP core network sends the pager mode CPM standalone message to the recipient CPM client indicated by the parameter, and if the indication information includes only the Request-Disposition and its value is fork, indicating that all of the online recipient CPM clients meet the receiving conditions, the SIP/IP core network needs to send the pager mode CPM standalone message to each recipient CPM client that meets the receiving conditions.

In the step S103: the SIP/IP core network may further carry out selection on the recipient CPM clients that meet the receiving conditions in the indication information according to the local policy, and then send the pager mode CPM standalone message to each of the final selected recipient CPM clients.

The local policy of the SIP/IP core network may be, but not limit to, selecting only the optimum recipient CPM client that meets the conditions as the receiving object and ignoring other recipient CPM clients.

In this embodiment, the recipient CPM clients may also be selected not by the terminating participating function entity but only by the SIP/IP core network, and in this scheme, the terminating participating function entity sends the received pager mode CPM standalone message directly to the SIP/IP core network which carries out selection according to one or more of the following parameters after receiving the pager mode CPM standalone message and then sends the pager mode CPM standalone message to each of the selected recipient CPM clients: factors like caller preference, online condition of each client, user configuration policy, operator policy and ability of each recipient client and so on.

### Embodiment 2

A method for multi-device routing of CPM session invite messages in the embodiment, comprising the following steps:
Step S201: the terminating participating function entity needs to send the received CPM session invite message to the recipient CPM client, and judges that there is a plurality of recipient CPM clients that meet the receiving conditions according to the receiving conditions, that is to say, the CPM session invite message is required to be sent to multiple online recipient CPM clients;

Before the PF-B sends the session invite message to the recipient, the PF-B may carry out selection on multiple online CPM clients of the recipient according to preset selection rules, such as factors like caller preference, user configuration policy, operator policy, ability of each recipient device and connection status (online or not) and so on, and it is assumed that there are at least two CPM clients obtained that meet the preset selection conditions in the embodiment.

Step S202: the terminating participating function entity sends a CPM session invite message which includes the indication information used to indicate the recipient CPM clients that meet the receiving conditions or the recipient CPM clients that do not meet the receiving conditions;
the included indication information may be one or more of the following parameters: Reject-Contact, Accept-Contact and Request-Disposition. The Rej ect-Contact is set as the unique identity of the recipient CPM clients that do not meet the receiving conditions, the Accept-Contact is set as the unique identity of the recipient CPM clients that meet the receiving conditions, and the value of the Request-Disposition is set as fork or no fork; the unique identity may be UUID or GRUU.

Step S203: the SIP/IP core network receives the CPM session invite message and then sends the CPM session invite message to each recipient CPM client that meets the receiving conditions according to the included indication information;
specifically, when the indication information includes the Reject-Contact, the SIP/IP core network sends the CPM session invite message to other online recipient CPM clients other than the recipient CPM client indicated by the parameter, and when the indication information includes the Accept-Contact, the SIP/IP core network sends the CPM session invite message to the recipient CPM client indicated by the parameter, and if the indication information includes only the Request-Disposition and its value is fork, indicating that all of the online recipient CPM clients meet the receiving conditions, the SIP/IP core network sends the CPM session invite message to each online recipient CPM client.

In the step S203: the SIP/IP core network may further carry out selection on the recipient CPM clients that meet the receiving conditions in the indication information according to the local policy, and then sends the CPM session invite message to each of the final selected recipient CPM clients.

The SIP/IP core network may further carry out selection on the recipient CPM clients according to the local policy, and select the recipient CPM clients in combination with the indication information included in the CPM session invite message, and then send the CPM session invite message to each of the selected recipient CPM clients.

In this embodiment, the recipient CPM client may also be selected not by the terminating participating function entity but only by the SIP/IP core network, and at this time, the terminating participating function entity sends the received CPM session invite message directly to the SIP/IP core network, and the SIP/IP core network receives the CPM session invite message and then carry out selection according to one or more of the following parameters and then sends the CPM session invite message to each of the selected recipient CPM clients: factors like caller preference, online condition of each client, user configuration policy, operator policy and ability of each recipient client and so on.

The present invention is further described by the following several application examples.

In the following two application examples, user A uses CPM devices denoted as Device-A at present and the CPM client built in the Device-A denoted as CPM client A, and assuming that the CPM address Addr-A is one CPM address of the user A, the CPM address belongs to the participating function entity A (denoted as PF-A);
the user B uses the same CPM address to register into the CPM system respectively by 4 different devices which are denoted as Device-B1, Devise-B2, Devise-B3 and Device-B4 respectively, and the CPM client built in the Device-B1 is denoted as CPM client B1, the CPM client built in the Device-B2 is denoted as CPM client B2, the CPM client built in the Device-B3 is denoted as CPM client B3 and the CPM client built in the Device-B4 is denoted as CPM client B4. The unique user agent identities of various CPM clients are instance-id-b1, instance-id-b2, instance-id-b3, instance-id-b4 respectively, or the GRUUs are gruu-id-b1, gruu-id-b2, gruu-id-b3, gruu-id-b4 respectively. The CPM address belongs to the CPM participating function entity B (denoted as PF-B).

### Application example 1

In this example, take the user A sending the pager mode CPM standalone message to the user B for example, and the participating function entity (PF-B) to which the recipient belongs carries out forkprocessing on the received CPMmessages, comprising the following steps:
Step S301: the user A in the CPM system sends a pager mode CPM standalone message to the user B.

Specifically, the user A uses Addr-A to send the pager mode CPM standalone message to the user B by the CPM client A in the device Device-A, and the pager mode CPM standalone message is routed to the PF-B from the PF-A.

Step S302: the PF-B receives the above-mentioned pager mode CPM standalone message, and then carries out selection processing on the recipient CPM clients according to the receiving conditions, and the final selected devices of the recipient that meets the receiving conditions are CPM client B1, CPM client B2 and CPM client B3;

Step S303: the PF-B sends the pager mode CPM standalone message SIP MESSAGE according to the selection result and includes the indication information in the sent pager mode CPM standalone message, that is any one or more of the following parameters: Reject-Contact, Accept-Contact and Request-Disposition.

For example:
The Reject-Contact carries "instance-id-b4" or "gruu-id-b4", indicating the CPM client indicated by the instance-id-b4 or the gruu-id-b4 does not receive the pager mode CPM standalone message;
the Request-Disposition carries "fork", indicating that the SIP/IP core network needs to send the request by forking.

Step S304: the SIP/IP core network receives the pager mode CPM standalone message sent by the PF-B, and judges that the pager mode CPM standalone message needs to be sent to the CPM client B1, CPM client B2 and CPM client B3 according to the included indication information; therefore, the SIP/IP core network sends the pager mode CPM standalone message by forking, that is to say, send 3 pager mode CPM standalone messages to CPM client B1, CPM client B2 and CPM client B3 respectively.

In this step, the SIP/IP core network may also select from the CPM clients according to the local policy, assuming that the CPM clients meeting the receiving conditions selected by the SIP/IP core network according to the local policy and indication information are CPM client B1 and CPM client B2, therefore the SIP/IP core network sends 2 pager mode CPM standalone messages to CPM client B1 and CPM client B2 respectively.

In this application example, in the case of multiple recipient CPM clients, the same solution can be used when the terminating participating function entity sends the deferred message. Additionally, the user A sends the pager mode CPM standalone message to a certain group (including preset group and temporary group), and if the group includes a certain user B at this time and the user B includes multiple devices that meet the receiving conditions, the terminating participating function entity that the user B belongs to may obviously process the paging message by using the solution.

Additionally, if the PF-B selects multiple recipient CPM clients meeting the conditions, there would be a plurality of methods for carrying the results, and take this embodiment for example, if the PF-B could send 3 paging message requests, the Accept-Contact of each request includes the unique CPM identity of the CPM client receiving the message.

In this application example, the PF-M may also carry out no condition matching to select the CPM clients that meet the conditions, and only the SIP/IP core network carries out selection and matching, and carries out routing by forking to each client that meets the conditions according to the matching result.

### Application example 2

In this example, take the user A sending the CPM session invite message to the user B for example, and the SIP/IP core network to which the recipient belongs carries out fork processing on the received CPM session invite message, comprising the following steps:
Step S401: the CPM client A sends the CPM session invite message to the user B, and the session invite message is routed to the PF-B from the PF-A.
Step S402: the PF-B receives the CPM session invite message, and the PF-B carries out selection processing on the recipient CPM clients according to the receiving conditions, and the final selected recipient CPM clients that meet the receiving conditions are the CPM client B1 and the CPM client B2;
Step S403: the PF-B sends the CPM session invite message which includes the indication information according to the selection result, that is to say, the message includes any one or more of the following parameters: Reject-Contact, Accept-Contact and Request-Disposition;
Step S404: the SIP/IP core network receives the CPM session invite message sent by the PF-B, and carries out selection on the recipient CPM clients again according to the included indication information and local policy, assuming that the final selected recipient CPM clients are still the CPM client B1 and the CPM client B2; therefore, the SIP/ IP core network sends the CPM session invite message by forking, that is to say, the SIP/IP core network sends 2 CPM session invite messages to the CPM client B1 and CPM client B2 respectively.

The device mentioned in the present invention refers to the physical entity operating the CPM client, and generally, one physical entity operates one CPM client, therefore, selecting and routing to the device that meets the conditions mentioned in the present invention means selecting and routing to the CPM client that meets the conditions.

To sum up, in the above-mentioned embodiment of the present invention, when the user uses the same communication address such as a CPM address to register in a communication system such as a CPM system by different clients, and when the terminating participating function entity sends an instant message such as a pager mode CPM standalone message or a CPM session invite message and so on, the messages are sent by forking respectively to two or more clients that meet the receiving conditions in multiple online clients. Thereby the problem of routing the message when the message of "one number, multiple devices" being forwarded is solved, thereby the transmission of the message may be realized better in the communication system such as a CPM system, improving the user experience.

## Claims

1. A method for routing SIP session message, comprising:
when a service server needs to send a SIP session invite message to one or more recipient clients, the service server including indication information while sending the SIP session invite message, a SIP/IP core network sending the SIP session invite message to said one or more recipient clients according to the indication information after receiving the SIP session invite message.

2. The method according to claim 1, wherein:
the service server is a CPM participating function entity, the recipient client is a recipient CPM client and the SIP session invite message is a CPM session invite message.

3. The method according to claim 2, wherein
the indication information is any one or more of following parameters:
Reject-Contact, Accept-Contact and Request-Disposition.

4. The method according to claim 2 or 3, wherein
the SIP/IP core network further carries out selection of the recipient CPM clients that meet receiving conditions in accordance with the indication information and, if present, a local policy, after receiving the CPM session invite message, and afterwards sends the CPM session invite message to each of selected recipient CPM clients.

5. A method for routing instant message, comprising:
when an instant message server needs to send an instant message to one or more recipient clients, the instant message server including indication information while sending the instant message, a SIP/IP core network sending the instant message to said one or more recipient clients according to the indication information after receiving the instant message.

6. The method according to claim 5, wherein
the instant message server is a CPM participating function entity, the instant message is a pager mode CPM standalone message and the recipient client is a recipient CPM client.

7. The method according to claim 6, wherein
the indication information is any one or more of following parameters: Reject-Contact, Accept-ContactandRequest-Dis position.

8. A method for routing SIP session message, comprising:
after receiving a SIP session invite message, a SIP/IP core network carrying out client selection according to one or more of following parameters: caller preference, online condition of each client, user configuration policy, operator policy and ability of each recipient client, and then sending the SIP session invite message to each of selected recipient clients.

9. The method according to claim 8, wherein the recipient client is a recipient CPM client, and the SIP session invite message is a CPM session invite message.

10. A method for routing instant message, comprising:
after receiving an instant message, a SIP/IP core network carrying out client selection according to one or more of following parameters: caller preference, online condition of each client, user configuration policy, operator policy and ability of each recipient client, and then sending the instant message to each of selected recipient clients.

11. The method according to claim 10, wherein the instant message is a pager mode CPM standalone message and the recipient client is a recipient CPM client.

12. A system for routing SIP sessionmessage, comprising a service server, a SIP/IP core network and one or more recipient clients; wherein
the service server is configured to include indication information in a SIP session invite message which is sent when the SIP session invite message is required to be sent to one or more recipient clients;
the SIP/IP core network is configured to send the SIP session invite message to said one or more recipient clients according to the indication information after receiving the SIP session invite message.

13. The system according to claim 12, wherein the service server is a participating function entity, the SIP session invite message is a CPM session invite message and the recipient client is a recipient CPM client.

14. The system according to claim 13, wherein the indication information is any one or more of following parameters:
Reject-Contact, Accept-Contact and Request-Disposition.

15. The system according to claim 13 or 14, wherein
the SIP/IP core network is further configured to further carry out selection on the recipient CPM clients that meet receiving conditions in accordance with the indication information and, if present, a local policy after receiving the CPM session invite message, and to send the CPM session invite message by forking to each of the recipient CPM clients that meet the receiving conditions.

16. A system for routing instant message, comprising an instant message server, a SIP/IP core network and one or more recipient clients; wherein
the instant message server is configured to include indication information in an instant message which is sent when the instant message is required to be sent to one or more recipient clients;
the SIP/IP core network is configured to send the instant message to said one or more recipient clients according to the indication information after receiving the instant message.

17. The system according to claim 16, wherein the instant message server is a CPM participating function entity, the instant message is a pager mode CPM standalone message and the recipient client is a recipient CPM client.

18. The system according to claim 17, wherein the indication information is anyone ormore of following parameters: Reject-Contact, Accept-Contact and Request-Disposition.

19. A system for routing SIP session message, comprising a SIP/IP core network and one or more recipient clients, wherein:
the SIP/IP core network is configured to carry out client selection according to one or more of following parameters after receiving a SIP session invite message: caller preference, online condition of each client, user configuration policy, operator policy and ability of each recipient client, and then send the SIP session invite message to each of selected recipient clients.

20. The system according to claim 19, wherein the SIP session invite message is a CPM session invite message and the recipient client is a recipient CPM client.

21. A system for routing instant message, comprising a SIP/IP core network and one or more recipient clients, wherein:
the SIP/IP core network is configured to carry out client selection according to one or more of following parameters after receiving an instant message: caller preference, online condition of each client, user configuration policy, operator policy and ability of each recipient client, and then send the instant message to each of selected recipient clients.

22. The system according to claim 21, wherein the instant message is a pager mode CPM standalone message and the recipient client is a recipient CPM client.
